# EUROPÄISCHE PATENTSCHRIFT

(11) **EP 1 271 123 B1**
(45) Veröffentlichungstag und Bekanntmachung des Hinweises auf die Patenterteilung: **06.04.2005**
(21) Anmeldenummer: 02013397.1
(22) Anmeldetag: 19.06.2002
(51) Int. Cl.: G01M 13/00, G01N 19/08, B07C 5/12

(54) **Verfahren und Vorrichtung zur Qualitätsprüfung elastischer und runder Formteile**
Method and apparatus for testing the quality of round resilient molded pieces
Procédé et appareil pour tester la qualité d'articles ronds moulés et élastiques

(30) Priorität: 19.06.2001 DE 10129196
(43) Veröffentlichungstag der Anmeldung: 02.01.2003
(73) Patentinhaber: Schmidt, Michael, 19055 Schwerin (DE)
(72) Erfinder: Schmidt, Michael, 19055 Schwerin (DE)
(74) Vertreter: Jaap, Reinhard

(56) Entgegenhaltungen:
- EP-A- 0 384 002
- EP-A- 0 730 147
- DE-A- 3 835 486
- DE-A- 4 114 728
- DE-A- 4 130 366
- DE-B- 1 276 548

## Beschreibung

Die Erfindung bezieht sich auf ein Verfahren nach dem Oberbegriff des Anspruchs 1 und eine entsprechende Vorrichtung nach dem Oberbegriff des Anspruchs 6.
Derartige Erfindungen werden innerhalb von Produktions- und Prüfstrecken sowohl in der Gummi- und Kunststoffindustrie als auch in Verarbeitungsbetrieben eingesetzt.

Elastische und runde Formteile sind vorzugsweise O-Ringe, Wellendichtringe, Dichtmanschetten oder auch Gummibuchsen und Gummidämpfer sowie torusförmige Silikon- oder Gelkissen. Dabei sind sowohl Kleinstteile bis hin zu großen Walzen oder Reifen vorstellbar.
Vorzugsweise werden, auch im Hinblick auf die Miniaturisierung, kleine radial elastische O-Ringe aus Elastomeren betrachtet. Derartige O-Ringe finden in Sicherheitsprodukten Verwendung, wonach eine 100%-Qualitätsprüfung notwendig ist. Dabei erstreckt sich die Prüfung von den elastischen Eigenschaften über die Maßgenauigkeit bis hin zur Oberflächenbeschaffenheit der Formteile.

Für O-Ringe sind verschiedene Fehlerarten in der DIN3771-N und DIN3771-S klassifziert. Im Fertigungsprozess der Hersteller treten eine Vielzahl individueller, technologisch bedingter Fehler auf. So können O-Ringe gerissen oder angerissen, die Oberfläche versprödet, wellig, mit Restgrad oder mit Einschlüssen behaftet sein. Auch Ausbrüche, Blasen, Fließfehler im Material, Altgummieinschlüsse sowie maßliche Abweichungen der Geometrie und/oder der Schnurstärke sowie Abweichungen der elastischen Eigenschaften sind möglich. Bei erhöhten Sicherheitsanforderungen, sogar in der Massenproduktion und besonders beim Einsatz in kostenintensiven Baugruppen, sind somit 100%-Qualitätsprüfungen für O-Ringe unumgänglich.
Dabei gestaltet sich schon die Qualitätsprüfung von Chargen von O-Ringen gleicher Größe schwierig und dazu kosten- und zeitintensiv. Derartige Prüfstrecken sind komplex und werden sowohl bei Herstellern von O-Ringen während des Herstellungsprozesses als auch bei den Verbrauchern von O-Ringen in allen erdenklichen Industriezweigen als Wareneingangskontrolle angewendet.
So erreicht man bei diesen automatisierten Prüfstrecken eine hohe Genauigkeit der Qualitätsprüfung nur auf Kosten eines geringen Durchsatzes und einer Erhöhung der Anlagen- und Stückkosten. Derart kostenintensive Prüfungen sind nur für Sonderteile vertretbar.
Dagegen ist die automatische 100%-Qualitätsprüfung von Chargen von O-Ringen unterschiedlicher Geometrien, die noch dazu kontinuierlich mit hohem Durchsatz bis hin zur automatischen Sortierung kostengünstig und mit frei wählbaren Prüfparametern und Prüfgenauigkeiten abläuft, bisher nicht bekannt.

Bekannt ist, dass O-Ringe von Hand verformt oder in Vorrichtungen eingelegt werden. In den Vorrichtungen werden Prüfungen vollführt und dabei die Ergebnisse aus dem visuellen Eindruck des Betrachters abgeleitet. Dabei kann die visuelle Begutachtung unter Zuhilfenahme optischer Systeme und auch datenverarbeitender Maschinen erfolgen. Eine solche Vorgehensweise ist heute nur noch in der Einzelfertigung für Spezialanwendungen möglich, da der Zeitaufwand hoch ist und die zum Handling und zur Beurteilung des Ergebnisses notwendige Fachkraft entsprechend hohe Kosten verursacht.

Bekannte Verfahren zur Massenprüfung von O-Ringen stellen für den Anwender meist einen Kompromiss dar, wesentliche Prüfungen - speziell auf Risse - unterbleiben. Daher kommen diese Anlagen nur bei qualitativ eher anspruchslosen Artikeln zum Einsatz.

So gewährleistet die OS DE 4130 366 A1 eine Prüfung von O-Ringen unter Verwendung zweier Dorne, die in den O-Ring eingreifen, ihn einer elastischen Dehnung unterziehen und umlaufen lassen. Der Umlauf um seinen Mittelpunkt wird möglich, da einer der Dorne angetrieben wird und durch die wirkende Reibkraft dem O-Ring eine gleichgerichtete Bewegung aufzwingt. Der O-Ring wird dabei von einem oder mehreren optischen Systemen aufgenommen und die dabei gewonnenen Daten in einer datenverarbeitenden Maschine soweit ausgewertet, so dass bei Beendigung der Prüfung auch das Prüfergebnis vorliegt und zu einer entsprechenden Entscheidung über die Brauchbarkeit führt. Dabei ist die Prüfvorrichtung sowohl vor Beginn und auch nach Beendigung der Prüfung leer und "erwartet" den nächsten O-Ring. Eine solche Prüfung ermöglicht demnach nur einen geringen Durchsatz an O-Ringen. Nachteilig ist weiterhin die einseitige und nur kurzzeitige elastische Beanspruchung der O-Ringe in Form von elastischer Dehnung.

Mit der DE 41 14 728 A1 nun ist eine Vorrichtung bekannt geworden, bei der die Prüfung eines O-Ringes durch eine Wälzbewegung um seinen Mittelpunkt zwischen zwei Druckrollen und einer Stützrolle gewährleistet wird. Dabei werden die Druckrollen den O-Ring elastisch stauchen und dieser wälzt durch deren durch Reibkraft übertragene Drehbewegung. Die Druckrollen sind dabei in gleicher Radialebene und achsparallel angeordnet sowie beweglich gelagert. Die Führung des wälzenden O-Rings auf den Druckrollen wird durch eine Umfangsnut gewährleistet, die zusätzlich zur besseren Übertragung der Kräfte mit einem Reibbelag ausgestattet ist. Die Stützrolle stützt den O-Ring dabei auf seiner tiefsten entstehenden Kuppe ab, wobei zwischen O-Ring-mittelpunkt und Achsebene der Druckrollen ein Abstand gewährleistet wird. Der gestauchte Ring wird während der Wälzbewegung von einem oder mehreren optischen Systemen erfasst und die dabei gewonnenen Daten in einer datenverarbeitenden Maschine soweit ausgewertet, so dass bei Beendigung der Prüfung das Prüfergebnis zu einer entsprechenden Entscheidung über die Brauchbarkeit führt. Dabei ist die Prüfvorrichtung sowohl während des Bestückens als auch bei Entnahme nach erfolgter Prüfung in Ruhe.

Eine ähnliche Vorrichtung ist aus der EP 0 384 002 A2 bekannt geworden, bei der die Drehbewegung des O-Ringes durch zwei über ein gemeinsames Antriebsritzel gegeneinander bewegte Formbacken erzeugt wird. Auch hier dreht der O-Ring auf der Stelle. Die Anwendung dieser beiden Verfahren und der entsprechenden Vorrichtungen ermöglicht ebenfalls nur einen geringen Durchsatz an O-Ringen, besonders dann, wenn mehrere nacheinandergeschaltete unterschiedliche Prüfungen ein komplexes Ergebnis erzielen sollen. Nachteilig ist auch die nur kurzzeitige elastische Beanspruchung des O-Rings in Form von elastischer Stauchung gemessen am gesamten Zyklus. Eine eingeschränkte Elastizität ist somit mit diesen Prüfungen nicht nachweisbar.

Die Konstruktion der mechanischen Prüfteilaufnahmen (Formbacken, Rollen Rollenabstände) ermöglichen jeweils nur die Prüfung eines bestimmten Teils, andere Geometrien verlagen eine geänderte Aufnahme.

Bekannte Verfahren und Vorrichtungen zur Qualitätsprüfung radial elastischer runder Formteile ermöglichen die Aussortierung vollständig ausgebildeter jedoch gerissener O-Ringe nur unter Zuhilfenahme spezieller Sensoren kombiniert mit entsprechender Handhabungstechnik und optischen Systemen. Zudem ist bei allen bekannten Verfahren und den dazugehörigen Vorrichtungen die Zykluszeit als Summe aus der Zeit für die Zuführung eines O-Rings, die Zeit für die Prüfung selbst und die Zeit zur Entnahme des geprüften O-Rings sehr hoch. Es entstehen dadurch den Durchsatz an Teilen begrenzende Zyklen. Zur Erhöhung des Durchsatzes ist eine parallele Bestückung und Entnahme mehrerer Prüfvorrichtungen denkbar, jedoch würde dabei das zu erwartende Ergebnis zu den entstehenden Kosten keine vertretbare Relation erreichen. Es ist bei allen bekannten Verfahren und Vorrichtungen von besonderem Nachteil, dass die elastische Beanspruchung trotz der vergleichsweise langen Zykluszeit nur kurzzeitig auf den O-Ring einwirkt. Dies fördert den Gutbefund für O-Ringe mit möglicherweise eingeschränkten Eigenschaften und leistet somit Defekten aus versteckten Fehlern Vorschub.

Der Erfindung liegt daher die Aufgabe zu Grunde, ein gattungsmäßiges Verfahren und eine entsprechende Vorrichtung zur Durchführung des Verfahrens zu entwickeln, bei dem die Qualitätsprüfung und die Handhabung radial elastischer runder Formteile automatisch untereinander verknüpft sind.

Diese Aufgabe wird verfahrensmäßig durch die kennzeichnenden Merkmale des Patentanspruchs 1 gelöst. Zweckdienliche Ausgestaltungsmöglichkeiten des Verfahrens ergeben sich aus den Merkmalen der Ansprüche 2 bis 4. Die vorrichtungsseitige Aufgabe wird durch die kennzeichnenden Merkmale des Anspruchs 5 und seiner zweckdienlichen Ausgestaltungsmöglichkeiten gemäss der Ansprüche 6 bis 10 gelöst.
Die Erfindung beseitigt die genannten Nachteile des Standes der Technik. Bei der Anwendung des erfmdungsgemäßen Verfahrens und der entsprechenden Vorrichtung wirken sich besonders positiv,
■ der Kostenvorteil durch Wegfall manueller Tätigkeiten und
■ der Zeitvorteil durch hohen Teiledurchsatz bei einer Transportgeschwindigkeit die größer oder gleich der Zuführgeschwindigkeit der Formteile ist und
■ ein weiterer Zeitvorteil durch die Integration der Vereinzelung der Formteile und
■ der Sicherheitsvorteil durch elastische Verformung über die gesamte Prüfstrecke durch Drehung der Formteile zwischen einer festen und einer beweglichen, jedoch geführten, Rollbahn und
■ der Vorteil einer umfassenden Qualitätsprüfung durch eine während des Transports des Formteils begleitende optische Prüfung und
■ der Vorteil einer Qualitätsmessung der Schnurstärke des unverformten O-Ringes, der dabei auf keiner Unterlage liegt und
■ der Vorteil der Variabilität durch gleichzeitige Verarbeitung von Chargen mit unterschiedlichen O-Ringdurchmessern und deren Sortierung nach Größen und
■ die hohe Flexibilität bei unterschiedlichen Anforderungskombinationen durch modulare Bauweise und Anpassbarkeit und
■ der Vorteil der Erweiterbarkeit bei Bedarf an zusätzlichen Prüfungen durch die variable Länge der Transportstrecke und
■ der Vorteil, Formteile unterschiedlicher Durchmesser auch auf freien Pfaden im Raum einschließlich Wendepfaden und Spiralwegen zu transportieren, aus.

Die Erfindung soll anhand eines Ausführungsbeispieles näher erläutert werden.
Dazu zeigen
**Fig. 1** den schematischen Aufbau einer Vorrichtung zur Qualitätsprüfung von O-Ringen und
**Fig. 2** einen vergrößernden Ausschnitt der Vorrichtung zur Qualitätsprüfung von O-Ringen im Bereich des Einzeihens der O-Ringe.

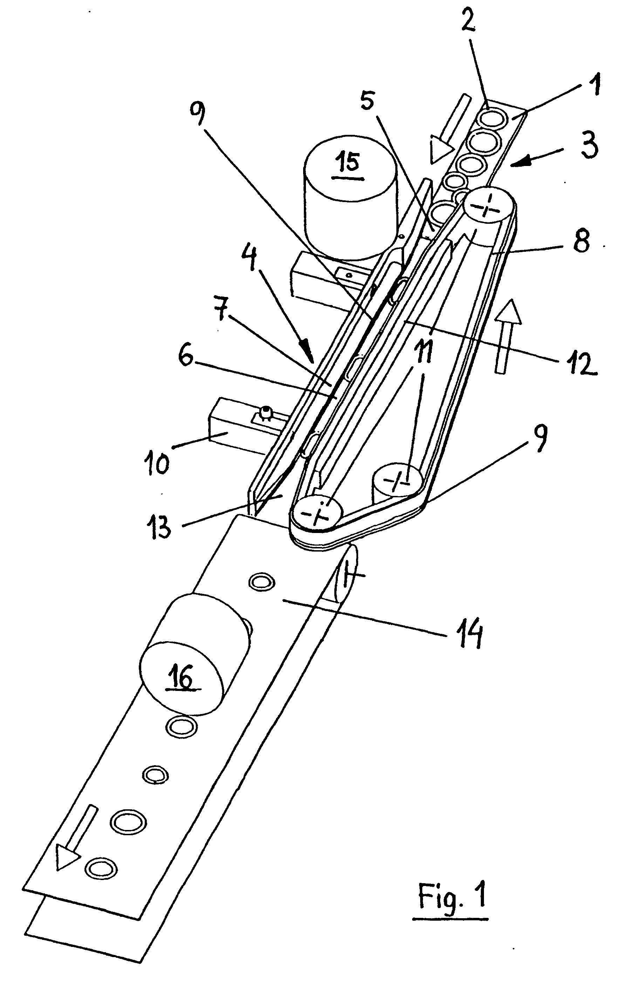

Gemäss Fig. 1 besteht die Vorrichtung zur Qualitätsprüfung eines radial elastischen runden Formteils aus einer Förderstrecke 1, der in flacher, rechteckig länglicher Ausführung und horizontaler Lage als Zuführeinrichtung für flach liegende O-Ringe 2 fungiert und eine Stauzone 3 bildet. Dabei ist es zweckmäßig, dass die Förderstrecke 1 an seiner Oberfläche mit einem nicht näher dargestellten künstlichen Förderrasenmaterial ausgestattet ist, dessen Borsten unter einem Winkel von etwa 45° in Förderrichtung geneigt sind, um eine Zwangsförderrichtung zu definieren. Die Stauzone 3 nimmt die O-Ringe 2 flach liegend und ungeordnet auf. Es sind als Förderstrecke 1 die verschiedensten Zuführeinrichtungen, wie Förderbänder oder Linearschwingförderer denkbar.
Die Vorrichtung zur Qualitätsprüfung radial elastischer und runder Formteile besteht weiterhin aus einer Prüfstrecke 4. Diese befindet sich auf gleicher horizontaler Ebene mit der Förderstrecke 1, ist mit dessen Förderrichtung gleichgerichtet und besteht aus einem konischen Einzugsraum 5 zum Vereinzeln der O-Ringe 2 und aus einem anschließenden Prüfraum 6. Der konische Einzugsraum 5 und der Prüfraum 6 werden durch unterschiedliche horizontale Abstände einer feststehenden Rollbahn 7 und einer antreibbaren und beweglichen Rollbahn 8 ausgebildet. Dabei entsprechen die genauen Abstände den Anforderungen aus Durchmesser und elastischen Eigenschaften der O-Ringe 2 derart, dass die O-Ringe 2 auf vorbestimmte Weise in einen unrunden Zustand versetzt werden. Es sind sowohl die feststehende Rollbahn 7, die in ihrer Länge begrenzt ist, als auch die antreibbare und kontinuierlich umlaufende Rollbahn 8, mit jeweils einer durchgehenden Längsnut 9 versehen. Die Form der Längsnut 9 ist dabei auf die äußere Kontur der radial elastischen runden Formteile abgestimmt und ist für O-Ringe 2 vorzugsweise als einfache V-Nut ausgeführt. Die feststehende Rollbahn 7 ist zur Veränderung des Abstands zur antreibbaren und beweglichen Rollbahn 8 mit zwei Querführungen 10 verschiebbar ausgestattet. Die antreibbare und bewegliche Rollbahn 8 ist als flexibler endloser Flachriemen ausgeführt und wird mittels dreier Spann- und Antriebsrollen 11 gespannt und wird auf der der feststehenden Rollbahn 7 zugewandten Seite der Prüfstrecke 4 von einer Führungsschiene 12 geführt. Dabei entspricht die Länge der Führungsschiene 12 etwa der Länge der feststehenden Rollbahn 7. Es ist die bewegliche Rollbahn 8 auch als Keilriemen, Kette, Fördergurt oder sonstige Führung denkbar. Dabei ist allen Möglichkeiten die Einbringung einer das Formteil führenden Kontur gleich.

Das offene Ende der Prüfstrecke 4 bildet einen konischen Ausstoßraum 13 aus. Der konische Ausstoßraum 13 vergrößert in Förderrichtung den Abstand zwischen der feststehenden Rollbahn 7 und der antreibbaren und beweglichen Rollbahn 8.

Die Vorrichtung zur Qualitätsprüfung eines radial elastischen runden Formteils besteht weiterhin aus einer Abtransporteinrichtung 14 in Form eines Förderbandes, das auf einer tieferen horizontalen Ebene, aber unter Beibehaltung der durch die Förderstrecke 1 und die Prüfstrecke 4 vorgegebenen Transportrichtung, ausgerichtet ist. Dabei ist der Höhenunterschied zwischen der Prüfstrecke 4 und der Abtransporteinrichtung 14 so gewählt, dass die Übergabe der O-Ringe 2 im freien Fall erfolgt. Es ist die Übergabe der O-Ringe 2 auch auf rotierende Drehteller oder Vibrationsförderer möglich.

Die Vorrichtung zur Qualitätsprüfung eines radial elastischen runden Formteils besteht außerdem aus einer nicht näher erläuterten optischen Einrichtung zur Oberflächenprüfung, vorzugsweise einer Rissprüfung 15 und letztlich aus einer nicht näher erläuterten optischen Einrichtung zur Prüfung der Schnurstärke 16 in der Höhe des O-Rings 2. Beide optischen Einrichtungen 15, 16 sind mit nicht dargestellten Datenleitungen an eine nicht dargestellte datenverarbeitende Maschine angeschlossen. Dabei ist die optische Einrichtung zur Rissprüfung 15 so positioniert, dass die optische Achse senkrecht zur Ebene der Prüfstrecke 4 und durch die durch die Mittelpunkte der O-Ringe 2 gebildete Linie verläuft. Die optische Einrichtung zur Prüfung der Schnurstärke 16 ist gegenüber dem konischen Ausstoßraum 13 so positioniert, dass die optische Achse auf die durch die Mittelpunkte der O-Ringe 2 gebildete Linie ausgerichtet ist und in der Ebene der Prüfstrecke 4 verläuft.

Das erfindungsgemäße Verfahren soll nachfolgend als komplexer Ablauf anhand einer Funktionsbeschreibung veranschaulicht werden. Dabei besteht eine Charge aus O-Ringen 2 mit unterschiedlichen Durchmessern, deren Abweichungen vom Material und von der Schnurstärke abhängen. Die Verarbeitung von Durchmessern von etwa 0,7 bis 1,3 x mittlerer Durchmesser in einer Charge sind möglich.

Durch nicht dargestellte Antriebseinheiten ist sowohl die Förderstrecke 1, die antreibbare und bewegliche Rollbahn 8 über die Spann- und Antriebsrollen 11 als auch die Abtransporteinrichtung 14 in Bewegung versetzt. Dabei sind die Bewegungen so aufeinander abgestimmt, dass den O-Ringen 2 eine kontinuierlich durchlaufende Bewegung von der Förderstrecke 1 über die Prüfstrecke 4 bis hin zur Abtransporteinrichtung 14 ermöglicht wird.

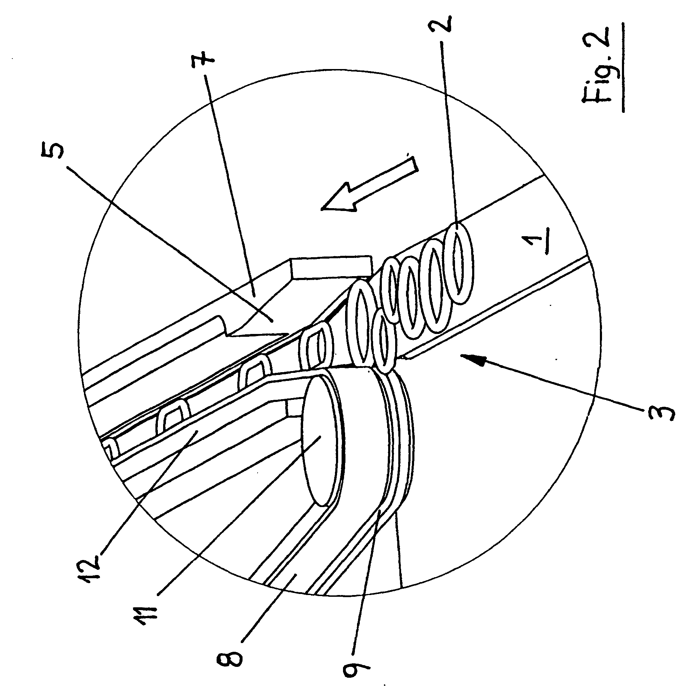

Gemäss Fig. 2 werden O-Ringe 2 einschichtig und in ungeordneter Lage auf der Fördestrecke 1 in die Stauzone 3 transportiert. Der dem konischen Einzugsraum 5 am nächsten liegende O-Ring 2 wird zum einen einer Schubkraft, die durch das immerwährende Fördern und Nachschieben von weiteren O-Ringen 2 ausgeht und zum anderen von der antreibbaren und beweglichen Rollbahn 8 ausgehenden Reibkraft ausgesetzt. Den beiden Kräfte wirkt die elastische Eigenspannung des O-Rings 2 entgegen, die nach Anwachsen der Schub- und Reibkraft überwunden wird und den O-Ring 2 derart verformt, dass der O-Ring 2 in die Längsnuten 9 sowohl von der feststehenden Rollbahn 7 als auch der beweglichen Rollbahn 8 einspurt und in den konischen Einzugsraum 5 unter weiterer elastischer Verformung einläuft. Es werden dabei O-Ringe 2 größeren Durchmessers auch eine größere elastische Verformung als O-Ringe 2 kleineren Durchmessers erfahren.

Gemäss Fig. 1 bewegt sich der O-Ring 2 während des Passierens des Prüfraumes 6 mit der Relativgeschwindigkeit, die der Geschwindigkeit der beweglichen Rollbahn 8 entspricht. Gleichzeitig dazu dreht der O-Ring 2 unter gleichmäßiger elastischer Verformung um seinen Mittelpunkt. Der O-Ring 2 wird nur durch die Längsnuten 9 der feststehenden Rollbahn 7 und der beweglichen Rollbahn 8 ohne eine weitere ebene Auflagefläche geführt.

Vollständig ausgeformten jedoch gerissenen O-Ringen 2 fehlt die für Umläufe um ihren Mittelpunkt notwendige elastische Eigenspannung. Diese O-Ringe 2 werden bei Erreichen des konischen Einzugsraumes 5 in die Längsnuten 9 einspuren, jedoch nach wenigen Umläufen um ihren Mittelpunkt auf Grund des Fehlens der elastischen Eigenspannung aus der Spur der Längsnuten 9 geraten und nach unten als Ausschussteile in einen nicht dargestellten Behälter ausfallen.

Andere O-Ringe 2 werden weitertransportiert und von der optischen Einrichtung zur Rissprüfung 15 erfasst, aufgenommen und die dabei erhaltenen Daten an eine nicht dargestellte datenverarbeitende Maschine zur Kennzeichnung und zur Auswertung weitergegeben. Durch die Oberflächenprüfung des O-Rings 2 im elastisch verformten Zustand werden auch kleinste Anrisse sichtbar. Die Genauigkeit der Prüfung ist dabei durch die Möglichkeiten der optischen Einrichtung zur Rissprüfung 15 und der Auswertesoftware variabel an die Stufe der Anforderung anpassbar.

Es ist vorstellbar, anstatt der beschriebenen Rissprüfung oder zusätzlich zu dieser weitere Prüfungen der Oberfläche auf andere Fehler mittels zusätzlicher optischer Einrichtungen durchzuführen, die sowohl über als auch unter den durchlaufenden O-Ringen 2 fest installiert oder im Gleichlauf mit den O-Ringen 2 verfahrbar angeordnet sind.

Am offenen Ende der Prüfstrecke 4 gelangt nun der O-Ring 2 in den Ausstoßraum 13 mit sich vergrößerndem Abstand zwischen der feststehenden Rollbahn 7 und der beweglichen Rollbahn 8. Der O-Ring 2 wird mehr und mehr von der elastischen Beanspruchung befreit, bis der O-Ring 2 seine ursprüngliche Form angenommen hat. Kurz vor dem Herunterfallen, wenn der hintere Teil des O-Rings 2 noch sicher von den Längsnuten 9 geführt wird und der vordere Teil des O-Rings 2 bereits frei liegt und entspannt ist, wird der O-Ring 2 in horizontaler Ebene von der optischen Einrichtung zur Prüfung der Schnurstärke 16 erfasst, aufgenommen und die dabei erhaltenen Daten an eine nicht dargestellte datenverarbeitende Maschine zur Kennzeichnung und zur Auswertung weitergeleitet.

Nach erfolgter Prüfung der Schnurstärke fällt der O-Ring 2 auf die Abtransporteinrichtung 14 und liegt dort gerade ausgerichtet auf. Dabei entsprechen die Abstände zwischen den O-Ringen 2 bei gleicher Relativgeschwindigkeit der Abtransporteinrichtung 14 zur Transportgeschwindigkeit des O-Ringes 2 innerhalb der Prüfstrecke 4 der Verzögerungszeit des Einzugs der O-Ringe 2 in den konischen Einzugsraum 5 zu Beginn des Durchlaufs.

Es ist vorstellbar, bei einer erneuten Zufuhr der O-Ringe 2 über eine weitere Förderstrecke 1 mit einem konischen Einzugsraum die O-Ringe 2 dann automatisch nach Größen zu sortieren. Dies wird möglich, wenn hierbei die feststehende Rollbahn abgesetzt und damit der Abstand zur antreibbaren und beweglichen Rollbahn entsprechend der Klassiergrößen sprunghaft anwächst. Bei Erreichen der Absätze würden die O-Ringe beginnend mit dem kleinsten Durchmesser automatisch ausfallen.

Weiterhin ist vorstellbar, nach jeder abgeschlossenen Prüfung eine Ausschleusung fehlerhafter O-Ringe 2 mittels verstellbarer Segmente in der feststehenden Rollbahn 7 direkt durchzuführen und die Einzelanwendungen in einer Baueinheit zusammenfassend zu realisieren.

### Liste der Bezugszeichen

- **1**: Förderstrecke
- **2**: O-Ring
- **3**: Stauzone
- **4**: Prüfstrecke
- **5**: konischer Einzugsraum
- **6**: Prüfraum
- **7**: feststehende Rollbahn
- **8**: antreibbare und bewegliche Rollbahn
- **9**: Längsnut
- **10**: Querführung
- **11**: Spann- und Antriebsrolle
- **12**: Führungsschiene
- **13**: konischer Ausstoßraum
- **14**: Abtransporteinrichtung
- **15**: optische Einrichtung zur Rissprüfung
- **16**: optische Einrichtung zur Prüfung der Schnurstärke

## Patentansprüche

1. Verfahren zur Qualitätsprüfung elastischer und runder Formteile (2), bei dem die Formteile nacheinander radial zusammengedrückt und gleichzeitig um ihre Mittelachse gedreht, beim Zusammendrücken und Drehen optisch auf Risse geprüft und Formteile (2) ohne Eigenspannung ausgefällt werden,
**dadurch gekennzeichnet, dass** die Formteile (2) in einem kontinuierlichen Ablauf
- auf einer Förderstrecke (1) ungeordnet zugeführt werden,
- in einem konischen Einzugsraum (5) geordnet und auf Abstand zueinander vereinzelt werden,
- über eine Prüfstrecke (4) unter dem radialen Druck an einer feststehenden Rollbahn (7) abgerollt werden und
- am Ende der Prüfstrecke (4) entspannt und auf einer Abtransporteinrichtung (14) abgelegt werden, wobei
- alle Formteil (2) rechentechnisch erfasst, Formteile (2) mit festgestellten Rissbildungen rechentechnisch **gekennzeichnet** und zu einem späteren Zeitpunkt ausgesondert werden.

2. Verfahren nach Anspruch 1,
**dadurch gekennzeichnet, dass** die sich aus dem Abrollen ergebene Transportgeschwindigkeit innerhalb der Prüfstrecke (4) mindestens so hoch wie die Zuführgeschwindigkeit auf der Förderstrecke (1) ist.

3. Verfahren nach Anspruch 1,
**dadurch gekennzeichnet, dass** die optische Prüfung eines Formteils (2) auf Rissbildung im Gleichlauf mit der Transportbewegung des abrollenden Formteils (2) erfolgt.

4. Verfahren nach Anspruch 1,
**dadurch gekennzeichnet, dass** beim Übergang vom gespannten in den entspannten Zustand eine optische Prüfung des Formteils (2) auf Maßhaltigkeit erfolgt und nicht maßhaltige Formteile (2) rechentechnisch **gekennzeichnet** und nachfolgend ausgesondert werden, wobei die optische Prüfung der Maßhaltigkeit sich auf den Schnurdurchmesser eines ringförmigen Formteils (2) bezieht und in der Phase erfolgt, wo das Formteil (2) hinteren Teil noch gespannt und am vorderen Teil schon entspannt ist, wobei die optische Achse dabei in der Ebene des Formteils (2) liegt und auf den vorderen entspannten Teil des Formteils (2) gerichtet ist.

5. Vorrichtung zur Qualitätsprüfung elastischer und runder Formteile (2), bestehend aus
- zwei parallelen Rollbahnen (7, 8) zur Aufnahme eines Formteiles (2), die in Querrichtung verschiebbar sind und so den Formteil (2) zusammendrücken, und die in Längsrichtung antreibbar und beweglich sind, um das Formteil (2) in Drehung zu versetzen und
- aus einer optischen Einrichtung (15) zur Rissprüfung,
**dadurch gekennzeichnet, dass**
- die beiden Rollbahnen eine Prüfstrecke (4) ausbilden mit einem konischen Einzugsraum (5) zum Ordnen und Vereinzeln ungeordnet bereitgestellter Formteile (2), und einem konischen Ausstoßraum (13) zur Übergabe der einzelnen Formteile (2) an eine Abtransporteinrichtung (14) und
- die Geschwindigkeiten der beiden Rollbahnen (7, 8) unterschiedlich zueinander ausgelegt sind, wobei die Bewegung der Rollbahn (8) mit der größeren Geschwindigkeit zum konischen Ausstoßraum (14) gerichtet ist.

6. Vorrichtung nach Anspruch 5,
**dadurch gekennzeichnet, dass** eine Rollbahn (7) feststehend und die andere Rollbahn (8) beweglich ausgeführt ist, wobei die bewegliche Rollbahn (8) eine Geschwindigkeit besitzt, die mindestens so groß wie die Geschwindigkeit der Förderstrecke (1) ist.

7. Vorrichtung nach Anspruch 6,
**dadurch gekennzeichnet, dass** der Raum zwischen den beiden Rollbahnen (7, 8) bodenlos ausgeführt ist, sodass nicht unter Eigenspannung stehende Formteil (2) nach unten durchfallen.

8. Vorrichtung nach Anspruch 7,
**dadurch gekennzeichnet, dass** im Bereich des Ausstoßraumes (13) eine optische Einrichtung (16) zur Prüfung der Maßhaltigkeit vorgesehen ist.

9. Vorrichtung nach Anspruch 8,
**dadurch gekennzeichnet, dass** die Rollbahnen (7, 8) zur Qualitätsprüfung von ringförmigen Formteilen (2) mit auf den Schnurdurchmesser des ringförmigen Formteiles (2) abge-stimmten Längsnuten (9) ausgestattet sind und die optische Einrichtung zur Prüfung der Maßhaltigkeit (16) auf den Schnurdurchmesser des ringförmigen Formteile (2) ausgelegt ist.

10. Vorrichtung nach Anspruch 9,
**dadurch gekennzeichnet, dass** die Abtransporteinrichtung (14) soweit unterhalb der Ebene der Längsnuten (9) der Rollenbahnen (7, 8) angeordnet ist, dass der in der Phase des Ausstoßes befindliche ringförmige Formteil (2) mit seinem bereits entspannten vorderen Teil im freien Raum hängt und die optische Achse der Einrichtung (16) zur Prüfung der Maßhaltigkeit sich in der Ebene des ringförmigen Formteiles (2) befindet.

## Claims

1. Method for testing the quality of resilient and round moulded pieces (2) in which the moulded pieces are radially compressed one after the other and simultaneously rotated about their central axis, optically tested for cracks when compressed and rotated, and moulded pieces (2) without internal stress are dropped,
**characterised in that** the moulded pieces (2), in a continuous sequence, are
- randomly conveyed on a feed belt (1)
- arranged in a conical intake space (5) and separated apart from one another,
- rolled via a testing run (4) under radial pressure against a fixed rolling path (7) and
- relaxed at the end of the testing run (4) and deposited on a discharge feed (14),
- all moulded pieces (2) being scanned by computer, moulded pieces (2) with detected crack formation identified by computer and sorted at a later time.

2. Method according to claim 1,
**characterised in that** the transport speed produced by rolling within the testing run (4) is at least as high as the feed rate on the feed belt (1).

3. Method according to claim 1,
**characterised in that** the optical testing of a moulded piece (2) for crack formation takes place at the same time as the transport movement of the rolling moulded piece (2).

4. Method according to claim 1,
**characterised in that** when transferred from the tensioned state to the relaxed state, optical testing of the moulded piece (2) for dimensional stability is carried out and non-dimensionally stable moulded pieces (2) are identified by computer and subsequently sorted, the optical testing for dimensional stability being related to the cord diameter of an annular moulded piece (2) and taking place at the stage where the moulded piece (2) is still tensioned on the rear part and already relaxed on the front part, the optical axis lying in the plane of the moulded piece (2) and being directed to the front relaxed part of the moulded piece (2).

5. Device for testing the quality of resilient and round moulded pieces (2) consisting of
- two parallel rolling paths (7, 8) for receiving a moulded piece (2) which are displaceable in the transverse direction and thus compress the moulded piece (2) and which can be driven and moved in the longitudinal direction, in order to displace the moulded piece (2) in rotation and
- an optical device (15) for crack testing,
**characterised in that**
- the two rolling paths form a testing run (4) with a conical intake space (5) for arranging and separating unarranged prepared moulded pieces (2) and a conical ejection space (13) for transferring the individual moulded pieces (2) to a discharge feed (14) and
- the speeds of the two rolling paths (7, 8) being designed differently from one another, the movement of the rolling path (8) with the greater speed being directed to the conical ejection space (14).

6. Device according to claim 5,
**characterised in that** the rolling path (7) is designed to be stationary and the other rolling path (8) movable, the movable rolling path (8) having a speed which is at least as great as the speed of the feed belt (1).

7. Device according to claim 6,
**characterised in that** the space between the two rolling paths (7, 8) is designed to be floorless, so that moulded pieces (2) without internal stress fall through below.

8. Device according to claim 7,
**characterised in that** in the region of the ejection space (13) an optical device (16) for testing the dimensional stability is provided.

9. Device according to claim 8,
**characterised in that** the rolling paths (7, 8) for testing the quality of annular moulded pieces (2) are equipped with longitudinal grooves (9) corresponding to the cord diameter of the annular moulded piece (2) and the optical device is designed for testing the dimensional stability (16) of the cord diameter of the annular moulded piece (2).

10. Device according to claim 9,
**characterised in that** the discharge feed (14) is arranged so far below the plane of the longitudinal grooves (9) of the rolling paths (7, 8) that, in the ejection stage, the already relaxed front part of the annular moulded piece (2) hangs freely and the optical axis of the device (16) for testing the dimensional stability is located in the plane of the annular moulded piece (2).

## Revendications

1. Procédé pour contrôler la qualité de pièces moulées (2) élastiques et rondes, selon lequel ces pièces sont comprimées radialement les unes après les autres avec en même temps rotation de chaque pièce autour de son axe, et pendant cette compression et cette rotation, un contrôle optique des fissures est effectué et des pièces moulées (2) dépourvues de tension interne sont rejetées,
**caractérisé en ce que**
les pièces moulées (2), de manière continue sont :
- amenées sans ordre sur une voie de transport (1),
- ordonnées dans un espace conique d'introduction (5) et isolées par espacement les unes des autres,
- mises en rotation sur un parcours de contrôle (4), par pression radiale sur une piste de roulement fixe (7),
- détendues à la fin du parcours de contrôle (4) et déposées sur un transporteur d'évacuation (14), et
- toutes les pièces moulées (2) sont détectées par une technique informatique, celles dans lesquelles a été établie la formation de fissures étant **caractérisées par** la technique informatique et séparées à un moment ultérieur.

2. Procédé selon la revendication 1,
**caractérisé en ce que**
la vitesse du transport résultant du roulement à l'intérieur du parcours de contrôle (4) est au moins égale à la vitesse sur la voie de transport (1).

3. Procédé selon la revendication 1,
**caractérisé en ce que**
le contrôle optique d'une pièce moulée (2) en ce qui concerne la formation de fissures a lieu en même temps que le mouvement de transport de la pièce moulée qui roule.

4. Procédé selon la revendication 1,
**caractérisé en ce que**
- lors du passage de l'état sous tension à l'état sans tension, a lieu un contrôle optique de la pièce moulée (2) qui concerne sa stabilité dimensionnelle, et les pièces moulées qui ne satisfont pas à ce contrôle sont **caractérisées par** la technique informatique et ensuite sont triées,
- le contrôle optique de la stabilité dimensionnelle porte sur le diamètre de cordon d'une pièce moulée (2) de forme annulaire, et s'effectue au cours d'une phase pendant laquelle la pièce moulée (2) est encore sous tension à sa partie arrière, tandis qu'elle est déjà détendue à sa partie avant, l'axe optique se trouvant dans le plan de la pièce moulée (2) et étant dirigé sur la partie avant détendue de cette pièce.

5. Dispositif pour contrôler la qualité de pièces moulées (2) élastiques et rondes, comprenant
- deux pistes de roulement parallèles (7, 8) pour accueillir une pièce moulée (2) qui peuvent coulisser en direction transversale en comprimant ainsi les pièces moulées (2), et également être entraînées en direction longitudinale de manière à mettre les pièces moulées (2) en
rotation,
- un dispositif optique (15) de contrôle des fissures,
**caractérisé en ce que**
- les deux pistes de roulement forment un parcours de contrôle (4) avec un espace conique d'introduction (5) pour ordonner et individualiser les pièces moulées (2) présentées sans ordre, et avec un espace conique de sortie (13) pour délivrer les pièces moulées (2) individuelles à un transporteur d'évacuation (14),
- les vitesses des deux pistes de roulement (7, 8) sont différentes, le sens du déplacement de la piste de roulement (8) présentant la plus grande vitesse étant dirigé vers l'espace conique de sortie (13).

6. Dispositif selon la revendication 5,
**caractérisé en ce qu'**
une piste de roulement (7) est fixe, tandis que l'autre piste de roulement (8) est mobile, avec une vitesse au moins égale à celle du parcours de transport (1).

7. Dispositif selon la revendication 6,
**caractérisé en ce que**
l'espace compris entre les pistes de roulement (7, 8) est dépourvu de plancher, de sorte que les pièces moulées (2) qui sont sans tension interne s'échappent vers le bas.

8. Dispositif selon la revendication 7,
**caractérisé en ce que**
dans la zone de l'espace de sortie (13) est prévu un dispositif optique (16) de contrôle de la stabilité dimensionnelle.

9. Dispositif selon la revendication 8,
**caractérisé en ce que**
les pistes de roulement (7, 8), pour le contrôle de la qualité de pièces moulées (2) de forme annulaire, présentent des rainures longitudinales accordées au diamètre de cordon de la pièce moulée annulaire (2) et le dispositif optique de contrôle de la stabilité dimensionnelle (16) est prévu pour le diamètre de cordon de la pièce moulée annulaire (2).

10. Dispositif selon la revendication 9,
**caractérisé en ce que**
le transporteur d'évacuation (14) est disposé en dessous du plan des rainures longitudinales (9) des pistes de roulement (7, 8), à une distance telle que la pièce moulée annulaire (2), qui se trouve en phase de sortie, est suspendue avec sa partie avant déjà détendue dans le vide, l'axe optique du dispositif (16) de contrôle de la stabilité dimensionnelle se trouvant dans le plan de la pièce moulée annulaire (2).
